(19) Europäisches Patentamt
European Patent Office
Office européen des brevets

(11) Veröffentlichungsnummer: **0 059 782**
**B1**

(12) **EUROPÄISCHE PATENTSCHRIFT**

(45) Veröffentlichungstag der Patentschrift: **21.05.86**

(51) Int. Cl.⁴: **C 09 B 67/26**, C 09 B 67/54

(21) Anmeldenummer: **81107437.6**

(22) Anmeldetag: **18.09.81**

(54) **Verfahren zur Herstellung konzentrierter wässriger Farbstoffpräparate von anionischen Papier- oder Wollfarbstoffen.**

(30) Priorität: **06.03.81 CH 1527/81**
**31.03.81 CH 2177/81**

(43) Veröffentlichungstag der Anmeldung:
**15.09.82 Patentblatt 82/37**

(45) Bekanntmachung des Hinweises auf die Patenterteilung:
**21.05.86 Patentblatt 86/21**

(84) Benannte Vertragsstaaten:
**BE CH DE FR GB IT LI SE**

(56) Entgegenhaltungen:
**EP-A-0 029 960**
**DE-A-2 505 254**
**FR-A-2 124 359**
**FR-A-2 416 926**

(73) Patentinhaber: **CIBA-GEIGY AG, Klybeckstrasse 141, CH-4002 Basel (CH)**

(72) Erfinder: **Lacroix, Roger, Dr., Rue Vauban 24, F-68300 Village-Neuf (FR)**
Erfinder: **Tempel, Ernst, Dr., Kilchgrundstrasse 45, CH-4125 Riehen (CH)**

(74) Vertreter: **Sandmair, Kurt, Dr. et al, Patentanwälte Schwabe, Sandmair, Marx Stuntzstrasse 16, D-8000 München 80 (DE)**

**EP 0 059 782 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft ein Verfahren zur Herstellung lagerstabiler, konzentrierter wässriger Farbstoffpräparate von anionischen Papier- oder Wollfarbstoffen.

Die Verwendung von wasserlöslichen Farbstoffen in der Form konzentrierter wässriger Lösungen, die in der Technik oft als "flüssige Farbstoffe" bezeichnet werden, hat in den letzten Jahren für das Färben von Papier und Textilien technische Bedeutung erlangt. Die Hauptvorteile solcher "flüssigen Farbstoffe" gegenüber pulvrigen Farbstoffen sind die Vermeidung des Staubes bei der Handhabung und die Leichtigkeit und Geschwindigkeit, mit der die "flüssigen Farbstoffe" abgemessen werden können, insbesondere beim Ansetzen von Druckpasten sowie von Klotz- und Färbeflotten, ferner die Vermeidung von Benetzungsproblemen durch Klumpenbildung, und fleckige Färbungen durch ungelöste Farbstoffpartikel. Solche flüssige Formulierungen sollten hoch konzentriert (mindestens 10 Gew.-% und vorzugsweise mehrals 15 Gew.-% Farbstoffgehalt) und mindestens über mehrere Monate in einem breiten Temperaturbereich (−10° bis +40°) unverändert, d.h. ohne Veränderung der Gebrauchseigenschaften, haltbar sein.

Im Idealfall besteht ein "flüssiger Farbstoff" aus einer wässrigen Lösung des Farbstoffs, wobei die Probleme der Beseitigung oder Rückgewinnung, die bei Verwendung organischer Lösungsmittel anstelle von Wasser auftreten, vermieden werden.

Bei vielen anionischen wasserlöslichen farbstoffen ist es jedoch ein besonderes Problem, solche wässrigen flüssigen formulierungen herzustellen, da diese oft zu wenig löslich sind und daher nicht genügend konzentrierte, lagerstabile formulierungen ergeben.

Aufgabe der vorliegenden Erfindung war daher die Herstellung konzentrierter, über mehrere Monate stabiler Flüssigpräparate von anionischen Farbstoffen, zum Färben und Bedrucken von Papier sowie für die Herstellung von Klotzflotten, Färbebädern und Druckpasten zum Färben und Bedrucken von Wolle.

Anionische Papier- bzw. Wollfarbstoffe fallen am Ende der Synthese im allgemeinen in Form eines salzhaltigen Rohfarbstoffs an, der aufgrund des z.T. erheblichen Salzgehalts eine nur ungenügende Wasserlöslichkeit besitzt. Die Herstellung konzentrierter Lösungen ist mit derartigen Farbstoffen daher nicht möglich. Ein hoher Salzgehalt wirkt sich zudem negativ auf die Haltbarkeit von Flüssigpräparaten aus.

Mit der Entwicklung membrangebundener Filtriertechniken beginnt man in zunehmendem Masse Farbstofflösungen auf diese einfache und doch wirkungsvolle Art und Weise zu entsalzen und von Nebenprodukten zu befreien und durch teilweisen Wasserentzug auf den erforderlichen Farbstoffgehalt einzustellen. In der FR-A-2 124 359 ist beispielsweise ein derartiges Verfahren beschrieben, das unter Verwendung von Celluloseacetat-Membranen durchgeführt wird. Derartige Membranen neigen jedoch zum Verstopfen und zeigen oft ein nicht ausreichendes Farbstoffrückhaltevermögen. Es wird daher während des Trennverfahrens vielfach ein fortschreitender Verlust an Farbstoff beobachtet.

Um hier zu besseren Ergebnissen zu gelangen, sind in der Vergangenheit sog. modifizierte Membranen entwickelt worden, das sind Membranen, die an ihrer Oberfläche z.B. ionische Gruppen tragen, die durch elektrostatische Abstossung ein Eindringen des Farbstoffs in die feinen Membrankanäle verhindern sollen (siehe DE-A-2 05 254). Aber auch mit solchen Membranen lassen sich nicht ohne weiteres befriedigende Filtrationszeiten erreichen. Gefunden wurde, dass sich die Nachteile bisheriger Membrantrennverfahren in einfacher Weise umgehen lassen, wenn man die salzhaltige wässrige Lösung oder Suspension des Rohfarbstoffs mittels eines Membrantrennverfahrens unter Verwendung einer modifizierten Membran entsalzt und aufkonzentriert und dabei so vorgeht, dass man zunächst unter ständiger Zufuhr von Frischwasser Salze und Nebenprodukte entfernt und die entsalzte Farbstofflösung anchliessend aufkonzentriert. Durch die zweistufige Verfahrensführung wird ein Viskositätsanstieg beim Aufkonzentrieren der Farbstofflösung vermieden und das Membrantrennverfahren kann bis zum Erreichen des gewünschten Endfarbstoffgehalts bei praktisch konstantem Membranflux durchgeführt werden.

Gegenstand der vorliegenden Erfindung ist somit ein Verfahren zur Herstellung lagerstabiler, konzentrierter, wässriger Farbstoffpräparate von anionischen Papier- oder Wollfarbstoffen, das dadurch gekennzeichnet ist, dass man eine wässrige Lösung bzw. Suspension mindestens eines, als Rohfarbstoff vorliegenden Papier- oder Wollfarbstoffs

(a) zur Abtrennung von Salzen und Synthesenebenprodukten mit Molekulargewichten unter 500 und teilweisen Abtrennung von Wasser über eine halbdurchlässige, asymmetrische, ionische Gruppen enthaltende Membran mit einem cut off level von 300 bis 500 und einem Porendurchmesser von 1 bis 500 Å führt und das Permeat ganz oder teilweise, kontinuierlich oder diskontinuierlich durch Wasser ersetzt, und

(b) die entsalzte Farbstofflösung anschliessend unter Verwendung der gleichen Membran aufkonzentriert.

Die Farbstofflösung kann gegebenenfalls vor und/oder nach dem Membrantrennverfahren mit in Flüssigformulierungen üblicherweise enthaltenen Hilfsmitteln versetzt werden. Man erhält so lagerstabile, konzentrierte Farbstofflösungen auf rein wässriger Basis, mit einem Inertsalzgehalt unter 1%.

Unter inerten Salzen (bzw. Elektrolyten) werden solche verstanden, welche von der Neutralisation und/oder dem Aussalzen des Farbstoffes aus der Synthese herrühren und in der Syntheselösung bzw. -suspension mitgeführt werden, wie Alkali- oder Erdalkali-Salze, beispielsweise Ammonium-, Magnesium-, Natrium- bzw. Kaliumchlorid, -sulfat oder -hydrogensulfat, vor allem Natriumchlorid.

Bei den Papier- und Wollfarbstoffen handelt es sich um wasserlösliche vorzugsweise sulfonsäure- bzw. carbonsäuregruppenhaltige metallfreie oder metallhaltige und metallisierbare Mono-, Dis- und Polyazofarbstoffe, Pyrazolon-, Thioxanthon-, Oxazin-, Stilben-, Formazan-, Anthrachinon-, Nitro-, Methin-,

Styryl-, Azastyryl-, saure Triphenylmethan-, Xanthon-, Naphthazarin-,Chinophthalon- oder Phthalocyaninfarbstoffe, und insbesondere um Farbstoffe der Azo-, Anthrachinon- und Phthalocyaninreihe.

Als wasserlösliche Metallkomplexfarbstoffe kommen sulfonsäure- bzw. carbonsäuregruppenhaltige Metallkomplexfarbstoffe, beispielsweise 1:1- oder 1:2-Metallkomplexe von Azo- oder Azomethinfarbstoffen oder metallisierte Phthalocyanine, insbesondere Kupfer- und Nickelphthalocyanine, in Betracht. Bei den 1:1- und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chrom-komplexe von insbesondere o-Carboxy-o'-hydroxy-, o-Hydroxy-o'-aminoder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Farbstoffe zusätzlich zu den Sulfonsäuregruppen noch andere in Azofarbstoffen übliche Substituenten enthalten können.

Beim vorliegenden Verfahren verwendet man die sulfonsäuregruppenhaltigen Farbstoffe sowie deren Metallkomplexe vorzugsweise in Form ihrer Metallsalze, wie sie bei der Synthese anfallen, z.B. der Kalium-, Magnesium- oder vor allem Natriumsalze. Sie können aber auch in Form ihrer Aminsalze verwendet werden.

Die Farbstoffe können gegebenenfalls auch in Mischungen miteinander oder gegebenenfalls mit Farbstoffen von einem anderen Typ vorliegen.

Die erfindungsgemäss verwendbaren Farbstoffe sind bekannt und können nach bekannten Methoden hergestellt werden.

Die erfindungsgemässen konzentrierten flüssigen Präparationen können als weitere Zusätze oberflächenaktive Substanzen (insbesondere für Metallkomplex-Farbstoffe), in der Färberei übliche Textilhilfsmittel oder Lösungsvermittler wie Caprolactam, Trimethyloläthan, Milchsäureamid oder Tetrahydroxymethylmethan (Pentaerythrit), sowie schaumdämpfende Hilfsmittel z.B. Siliconöle, Gefrierschutzmittel sowie Pilz- und/oder Bakterienwachstum hemmende Stoffe. Selbstverständlich müssen diese Zusätze gegenüber den verwendeten Farbstoffen inert sein.

Ein Vorteil des Verfahrens gemäss vorliegender Erfindung ist es jedoch, dass man in den erfindungsgemässen Präparaten weitgehend auf weitere Zusätze verzichten kann, bzw. sie in wesentlich geringeren Mengen als bisher erforderlich einsetzen kann.

Ferner können die nach dem erfindungsgemässen Verfahren hergestellten Lösungen noch mit kleineren Mengen (ca. 1 bis 10 g/l) üblicher Zusatzstoffe wie Harnstoff, Dextrin oder Glucose versetzt werden.

Die Zusätze können in Gesamtmengen von vorzugsweise 0,1 bis 30 Gewichtsprozent, bezogen auf das Farbstoff-Präparat verwendet werden.

Die erfindungsgemäss verwendbaren oberflächenaktiven Substanzen (Tenside) können einzeln oder im Gemisch eingesetzt werden. Sie werden vorzugsweise in Mengen von 1 bis 5 Gewichtsprozent, bezogen auf das Farbstoff-Präparat verwendet.

Als erfindungsgemäss verwendbare oberflächenaktive Substanzen kommen beispielsweise in Frage: Dispergatoren, Netz- oder Dispergiermittel anionischer, kationischer oder nichtionischer Nitur, wie Natriumdioctylsulfosuccinit, Dibutylnaphthilinsulfonat, Dodecylbenzolsulfonat, Laurylpyridiniumchlorid, Alkylphenylpolyglykoläther, Stearyldiphenyl-oxyäthyldiäthylentriamin und Aethylenoxid-Additionsprodukte.

Bevorzugte anionische Tenside sind Kondensationsprodukte aromatischer Sulfonsäuren mit Formaldehyd wie Kondensationsprodukte aus Formaldehyd, Naphthalinsulfonsäure und Benzolsulfonsäure, oder ein Kondensationsprodukt aus Rohkresol, Formaldehyd und Naphthalinsulfonsäure, sowie vor allem Kondensationsprodukte aus Phenol-, Kresol- oder Naphthosulfonsäure und Formaldehyd oder Ligninsulfonate (Sulfit-Celluloseablauge) oder Oxyligninsulfonate, und insbesondere Kondensationsprodukte aus Naphthalinsulfonsäure und Formaldehyd, resp. ihre Alkali- und/oder Ammoniumsalze.

Als erfindungsgemäss verwendbare nichtionogene oberflächenaktive Verbindungen kommen vor allem in Betracht: Polyäthylenglykole mit einem Molekulargewicht von vorzugsweise 200 bis 1000; Mischpolymerisate aus Aethylenoxid und Propylenoxid (sog. Blockpolymerisate); Umsetzungsprodukte aus Fettsäuren mit 8 bis 22 Kohlenstoffatomen und Aminen oder Hydroxyalkylaminen, wie z.B. Cocosfettsäureamid, Oelsäurediäthanolamid oder Cocosfettsäureäthanolamid; sowie Anlagerungsprodukte aus z.B. 5 bis 80 Mol, vorzugsweise 10 bis 30 Mol Alkylenoxiden, insbesondere von Aethylenoxid, wobei einzelne Aethylenoxideinheiten durch substituierte Epoxide, wie Styroloxid und/oder Propylenoxid, ersetzt sein können, angelagert an höhere Fettsäuren, vorzugsweise mit 8 bis 22 Kohlenstoffatomen, beispielsweise Anlagerungsprodukte aus Fettsäuren (z.B. Oelsäure oder Ricinolsäure) und 10 bis 30 Mol Aethylenoxid, vorzugsweise ein Anlagerungsprodukt aus Oelsäure und 20 Mol Aethylchoxid, oder ein Ricinolsäureester mit 15 Mol Aethylenoxid, oder Anlagerungsprodukten der Alkylenoxide an gesättigte oder ungesättigte Alkohole, Mercaptane oder Amine mit 8 bis 22 Kohlenstoffatomen oder an Alkylphenole oder Alkylthiophenole, deren Alkylrest mindestens 7 Kohlenstoffatome aufweisen, beispielsweise Fettalkoholpolyglykoläther, besonders solche aus einem 8 bis 22 Kohlenstoffatome aufweisenden aliphatischen Kohlenwasserstoffrest veräthert mit 5 bis 200 Mol, vorzugsweise mit 20 bis 100 Mol Aethylenoxid, wie Cetylalkohol veräthert mit 25 Mol Aethylenoxid, Stearylalkohol veräthert mit 25 bis 80 Mol Aethylenoxid und Oleylalkohol veräthert mit 20 bis 80 Mol Aethylenoxid; sowie Hydroabietylalkohol veräthert mit 25 bis 100 Mol Aethylenoxid, oder p-Nonylphenol veräthert mit 9 Mol Aethylenoxid.

Die erfindungsgemässen flüssigen Farbstoffpräparate enthalten insbesondere 10 bis 60 Gewichtsprozent mindestens eines anionischen Farbstoffes, 90 bis 40 Gewichtsprozent Wasser, höchstens 1 Gewichtsprozent anorganisches Inertsalz und je nach Farbstoffklasse gegebenenfalls 0,1 bis 30 Gewichtsprozent weitere Zusätze,

bezogen auf das gesamte Präparat.

Die Präparate sind gekennzeichnet durch einen Gehalt an anorganischem Inertsalz von höchstens 1 Gew.-%, insbesondere von höchstens 0,5 Gew.-% und vorzugsweise von höchstens 0,1 Gew.-%, bezogen auf das flüssige Präparat.

Die genaue Zusammensetzung der Farbstoffpräparate richtet sich nach dem Farbstofftyp.

Es ist darum manchmal vorteilhaft für die erfindungsgemässen Flüssigformulierungen, welche Metallkomplexfarbstoffe enthalten, kleine Mengen einer oberflächenaktiven Substanz zu verwenden, wogegen für die Direktfarbstoffe, die sogenannten Papierfarbstoffe, im allgemeinen keine weiteren Zusätze erforderlich sind.

Demnach enthalten die bevorzugten Flüssigformulierungen der Metallkomplexfarbstoffe ausser Wasser 10 bis 60 Gew.-%, vorzugsweise 30 bis 35 Gew.-% mindestens eines Metallkomplexfarbstoffes, vorzugsweise eines Chrom- oder Kobaltkomplexfarbstoffes, gegebenenfalls 1 bis 5 Gew.-% einer oberflächenaktiven Substanz und gegebenenfalls 0,1 bis 30 Gew.-%, insbesondere 0,1 bis 10 Gew.-% weitere Zusätze.

Die Prozentsätze sind jeweils auf das Gesamtgewicht des flüssigen Präparates bezogen.

Die anionischen Papier-Farbstoffe sind im Colour-Index als sogenannte Direkt-Farbstoffe aufgeführt. Diese Sulfogruppen enthaltende Farbstoffe sowie deren Metallkomplexe werden vorzugsweise in Form ihrer Metallsalze, wie sie bei der Synthese anfallen, z.B. die Kalium-, Magnesium- oder vor allem Natriumsalze verwendet. Diese weisen als Rohfarbstoffe, d.h. so wie sie nach der Synthese anfaller, eine Löslichkeit in Wasser bei Raumtemperatur (20°C) von 10 bis 60 oder mehr g/l auf. Die Farbstofflösungen dieser Farbstoffe, welche nach dem erfindungsgemässen Verfahren hergestellt wurden, enthalten dagegen ca. 120 bis 250 g Farbstoff pro Liter Wasser. Die Löslichkeit des Farbstoffs ist also erheblich verbessert.

Die bevorzugten erfindungsgemässen flüssigen Farbstoffpräparate der Direktfarbstoffe enthalten 10 bis 60 Gew.-%, vorzugsweise 12 bis 20 Gew.-% mindestens eines anionischen Farbstoffes, insbesondere eines 2- bis 4-Sulfogruppen enthaltenden anionischen Diazo- oder Azoxy-Farbstoffes oder dessen Kupferkomplexes, 90 bis 40 Gew.-% Wasser und höchstens 1 Gew.-% Elektrolyt, aber keine weiteren Zusätze.

Obwohl es im allgemeinen nicht nötig ist, kann man in bestimmten Fällen, falls erwünscht, diesen erfindungsgemässen Lösungen geringe Mengen weiterer Zusätze wie z.B. Textilhilfsmittel, schaumdämpfende Hilfsmittel, Gefrierschutzmittel, Pilz- und/oder Bakterienwachstumshemmende Stoffe, zusetzen.

Diese Flüssigformulierungen stellen konzentrierte, echte Lösungen dar die in jedem Verhältnis mit kaltem und warmem Wasser mischbar sind und sich insbesondere zum Färben und Bedrucken von Papier, einschliesslich Halbkartons und Kartons eignen, wobei man diese Materialien z.B. in der Masse, durch Streichen oder durch Tauchen färben kann.

Diese Farbstofflösungen bieten zudem keine toxikologischen Probleme von der Formulierung her, da sie praktisch nur aus Farbstoff und Wasser bestehen.

Das erfindungsgemässe Verfahren wird beispielsweise folgendermassen durchgeführt.

Eine wässrige Lösung bzw. Suspension des Rohfarbstoffes wird zunächst über eine halbdurchlässige, ionische Gruppen enthaltende Membran geführt, deren Poren einen Durchmesser von 1 bis 500 Å aufweisen.

Als Ausgangslösung bzw. -suspension kann man die direkt aus der Synthese erhaltene wässrige Lösung bzw. Suspension oder eine wässrige Anschlämmung des feuchten Press- oder Filterkuchensder Rohfarbstoffe mit unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen z.B. das Kupplungs- bzw. Kondensationsprodukt nicht oder nur äusserst mühsam abtrennbar ist, kann auch direkt die rohe Kupplungs-, Kondensations- bzw. Neutralisationslösung verwendet werden. Vorteilhaft verwendet man Ausgangslösungen bzw. -suspensionen, die 2 bis 50% Farbstoff enthalten.

Bei manchen Farbstoffen, vor allem Metallkomplexfarbstoffen, ist es vorteilhaft, den als Syntheselösung bzw. als Presskuchen erhaltenen Rohfarbstoff nach bekannten Methoden, z.B. in einer Sandoder Mikrosolmühle nass zu mahlen.

Man kann aber auch von dem trockenen Rohfarbstoffpulver ausgehen, wenn man es zunächst mit Wasser anschlämmt.

Gewünschtenfalls kann man die Synthesemischung mit Wasser verdünnen und/oder auch mit weiteren, für die Herstellung der flüssigen Präparate erwünschten Zusätzen, z.B. oberflächenaktiven Substanzen (Tenside) versetzen. Auf diese Weise werden die Zusätze, vor allem die oberflächenaktiven Substanzen, in einem Arbeitsgang ebenfalls entsalzt welche von der Membran ebenfalls zurückgehalten werden und zudem die Membran nicht beeinträchtigen. Das Gemisch wird zur Abtrennung von Synthesenebenprodukten mit Molekulargewichten, die unterhalb des "cut off level" der verwendeten Membran liegen, über die halbdurchlässige Membran geführt anschliessend wird auf einen Gehalt an Farbstoff von mindestens 10 und vorteilhaft 20 bis 60% aufkonzentriert.

Das erfindungsgemässe Verfahren ermöglicht nicht nur die Herstellung von flüssigen Farbstoff-Präparaten mit verbesserten Eigenschaften, sondern bietet technische Vorteile gegenüber den herkömmlichen Verfahren, weil man einige Verfahrensschritte, z.B. langwierige kann, was u.a. zur Erspamis an Zeit und Energie führt. Bei den verhältnismässig schwerlöslichen Metallkomplex-Farbstoffen ist es sogar in einigen Fällen möglich, auf das lästige vormahlen der Farbstoffe zu verzichten.

Erfindungsgemäss verwendbare, halbdurchlässige Membranen sollen höhermolekulare Stoffe zurückhalten, während sie einen hohen Durchfluss von Wasser und gelösten Stoffen mit einem niedrigen Molekulargewicht,

z.B. Salzen, wie Natriumchlorid, Natriumsulfat, Kaliumchlorid, Ammoniumsulfat, Natriumphosphat, Kaliumsulfat, Natriumacetat oder niedrigmolekularen Verunreinigungen, z.B. nicht umgesetzte oder teilweise zersetzte Ausgangsprodukte, gewährleisten.

Sie sollen aber auch verschieden geladene Ionen trennen können.

Der Rückhalt bzw. die Abtrennung ("cut off level") wird durch das Molekulargewicht bzw. die ionische Beladung bestimmt. Diese sogenannte Membran-Hyperfiltration wird auch Umkehr-Osmose (Reverse Osmosis) genannt und ist mit der Ultrafiltration verwandt. Unter diesem Begriff werden Abtrennungsvorgänge im molekularen Bereich verstanden.

Die im vorliegenden Verfahren verwendeten Membranen sind halbdurchlässige, geladene, asymmetrische Membranen, deren Poren einen Durchmesser von 1 bis 500 Å aufweisen. Sie bestehen aus organischem Material, das ionische Gruppen enthält. Diese Membranen weisen einen "cut off level" von 300 bis 500 auf. Für das Verfahren gemäss vorliegender Erfindung sind Membranen mit einem "cut off-level" von 400 bis 500 besonders geeignet. Sie lassen Wasser und aufgelöste Stoffe, die auf Grund ihrer Molekulargrössen unterhalb des Abtrenn-Niveaus ("cut off level") liegen, bei hohen Geschwindigkeiten pro Flächeneinheit und bei geringem bis mittlerem Druck durchtreten. Erfindungsgemäss werden Drucke von 10 bis 100 bar. vorzugsweise von 10 bis 30 bar und insbesondere von 20 bis 30 bar verwendet. Der Druck kann z.B. mittels einer Pumpe ausgeübt werden.

In einem Filtrationsgang kann der Entsalzungseffekt ohne Farbstoffverlust bis zu 70 und mehr Prozent betragen. Durch Verdünnen der zurückgehaltenen Lösung oder Suspension mit Wasser, zweckmässigerweise auf das Ausgangsvolumen und durch ein- oder mehrmalige Wiederholung des Verfahrens wird eine weitere Verminderung des Gehalts an niedermolekularen Komponenten erreicht. Die Trennung kann auch kontinuierlich durchgeführt werden, indem die Zufuhrgeschwindigkeit des Wassers derjenigen der Permeatabnahme angepasst wird. Diskontinuierlich und kontinuierlich können auf diese einfache Art und Weise bei Zimmertemperatur Entsalzungs- und Reinigungseffekte von bis zu 95 % oder gewünschtenfalls gar bis 99 %, und mehr, d.h. bis das Permeat frei von unerwünschten Stoffen ist, erreicht werden. Anschliessend wird die Farbstofflösung auf den gewünschten Endfarbstoffgehalt aufkonzentriert.

Die erfindungsgemäss verwendbaren Membranen bestehen im wesentlichen aus einem polymeren Stoff, der mindestens an der Oberfläche durch Reste mit ionisierbaren Gruppen modifiziert ist.

Es können in dieser Weise modifizierte natürliche, halbsynthetische oder synthetische Materialien zu Membranen verarbeitet werden. Ein derart zu modifizierender polymerer Stoff enthält als reaktionsfähige Gruppen beispielsweise Hydroxyl und/oder Aminogruppen. Er kann dann mit geeigneten Reagenzien umgesetzt werden, die einerseits ionisierbare Gruppen und andererseits mindestens eine unter Bildung einer kovalenten Bindung reaktionsfähige Gruppierung enthalten.

Beispielsweise können folgende polymere Verbindungen in der angegebenen Weise modifiziert werden:
- Polymerelektrolyte,
- Polyvinylalkohole,
- Celluloseäther oder -ester wie Cellulosenitrat oder -propionat,
- vorzugsweise Celluloseacetate, z.B. solche mit niedrigem Acetylgruppengehalt aber auch höher acylierte Cellulose, z.B. sog. Zweienhalbacetat, oder
- Polyacrylnitril und Copolymere aus Acrylnitril und anderen äthylenisch ungesättigten Monomeren.

Als reaktive Reagenzien, die eine ionisierbare Gruppe enthalten, kommen farblose und farbige Verbindungen in Betracht, z.B. ionogene Reaktivfarbstoffe, die verschiedenen Klassen angehören können, wie Anthrachinon-, Azo- oder Formazanfarbstoffe. Als Reaktivgruppen, welche die Bindung dieser Reagenzien an die Ausgangspolymeren ermöglichen, seien die folgenden genannt:
- Carbonsäurehalogenidgruppen,
- Sulfonsäurehalogenidgruppen,
- Reste α, β-ungesättigter Carbonsäuren, z.B. der Acrylsäure, Methacrylsäure, α-Chloracrylsäure, ß-Bromacrylsäure,
- Reste vorzugsweise niedriger Halogenalkylcarbonsäuren, z.B. der Chloressigsäure, α, β-Dichlorpropionsäure, α, β-Dibrompropionsäure,
- Reste von Fluorcyclobutancarbonsäuren, z.B. der Tri- oder Tetrafluorcyclobutancarbonsäure,
- Reste mit Vinylacylgruppen, z.B. Vinylsulfongruppen oder Carboxyvinylgruppen,
- halogenierte Pyrimidin- oder 1,3,5-Triazinreste.

Als ionisierbare Gruppen sind z.B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Isothiocyanatgruppen, von primären, sekundären oder tertiären Aminogruppen und Wasserstoff gebildete Ammoniumgruppen oder quaternäre Ammoniumgruppen, ferner Phosphonium- oder Sulfoniumgruppen geeignet. Besonders günstige Ergebnisse werden in manchen Fällen mit sulfonsäuregruppenhaltigen Verbindungen erzielt. Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten.

Membranen aus (teilweise acetyliertem) Celluloseacetat können z.B. durch Umsetzung mit den zuvor genannten reaktiven chemischen Verbindungen, insbesondere Reiktivfarbstoffen modifiziert werden (GB-PS 1 504 261).

Eine weitere Modifikation von Celluloseacetat kann z.B. durch folgende chemische Umsetzungen (in der angegebenen Reihenfolge) erfolgen: polyfunktionelle monomere Verbindung mit mindestens zwei funktionellen

Gruppen (z.B. Cyanurchlorid), polyfunktionelles Polymer (z.B. Polyäthylenimin), ionische Verbindung (z.B. ionische Reaktivfarbstoffe, Reaktivgruppierungen und ionische Gruppen wie angegeben) [EP-OS 26 399].

In analoger Weise kann man auch Polyvinylalkohol enthaltende Membranen modifizieren.

Die polyfunktionelle monomere Verbindung weist vorzugsweise mindestens 2 funktionelle Gruppen auf. Besonders geeignet sind Halogendi- oder-triazine, wie z.B. Cyanurhalogenide (Cyanurchlorid), oder Tri- oder Tetrahalogenpyrimidine (Tetrachlorpyrimidin).

Die polyfunktionellen Polymere weisen vor allem aliphatische oder aromatische Aminogruppen, Hydroxyl-, Thiol-, Isocyanat- und/oder Isothiocyanatgruppen auf. Geeignete polyfunktionelle Polymere sind Polyethylenimin, Polyvinylalkohol, Cellulosederivate oder Polyvinylanilin; Polyäthylenimin ist bevorzugt.

Die Membran enthält als ionische Gruppe vorzugsweise Sulfonsäure-, Carbonsäure- oder Ammoniumgruppen.

Besonders vorteilhaft sind die Membranen, die Reste eines Reaktivfarbstoffes als Reste mit ionogenen Gruppen enthalten.

Es können aber auch Membranen verwendet werden, die aus einem Grundgerüst bestehen, das Polyacrylnitril oder Polymerisat aus Acrylnitril und anderen äthylenisch ungesättigten Monomeren enthält. (GB-OS 2 058 798).

Durch Umsetzung mit Hydroxylamin führt man Amidoximgruppen in die Membran ein und modifiziert diese dann wie für die Celluloseacytatmembranen angegeben.

Der Anteil der Acrylnitrileinheiten im Grundgerüst der Membran beträgt vorteilhaft mindestens 5 und vorzugsweise mindestens 20 Gewichtsprozent.

Bevorzugt sind Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymeren auf Acrylnitrilbasis.

Die so modifizierten Membranen können noch einer Wärmebehandlung unterworfen werden ("Tempern"). Durch die Wärmebehandlung wird weitgehend die Porengrösse der Membranhaut bestimmt. Man behandelt beispielsweise die Membran während 1 bis 30 Minuten bei einer Temperatur von 60 bis 90° C, zweckmässig indem man sie in warmes Wasser taucht. Gegebenenfalls kann die Wärmebehandlung auch vor der Umsetzung mit der reaktiven, ionisierbare Gruppen enthaltenden Verbindung ausgeführt werden. Ferner lässt sich die Umsetzung auch ausführen, bevor das polymere Material zur asymmetrischen Membran verarbeitet wird.

Die Membranen können verschiedene Formen aufweisen, z.B. plattenförmig, blattförmig, röhrenförmig, in Form einer Tasche, eines Konus oder von Hohlfasern vorliegen. Bei starker Druckbelastung können die Membranen natürlich durch Drahtsiebe oder Lochplatten gestützt werden. Innerhalb des weiter oben angegebenen Bereiches kann die Porengrösse durch abgestuftes Tempern variiert und ebenfalls dem jeweiligen Verwendungszweck angepasst werden. Zweckmässig beträgt die durchschnittliche Ladungsdichte (gleich Gehalt an ionisierbaren Gruppen) der Membran 1 bis 100 Milliäquivalente je kg trokkene Membran.

Bei den erfindungsgemässen, konzentrierten flüssigen Präparaten handelt es sich in der Regel um echte oder kolloidale Lösungen. Sie sind dünnflüssig (Viskosität von etwa 5 bis 400 cP/20° C) und gut lagerstabil d.h. sie bleiben mindestens mehrere Monate bei Temperaturen von −20 bis +60° C, insbesondere −10 bis +40° C in gebrauchsfähigem Zustand.

Sie können sich zwar beim Abkühlen unter 0° C gelegentlich verfestigen; dies hat jedoch nach der Rückkehr zu Normaltemperaturen keinen nachteiligen Einfluss auf die Gebrauchseigenschaften. Diese Präparate können bei der Herstellung von Klotzflotten, Färbebädern und Druckpasten sowohl mit Wasser als auch mit organischen Lösungsmitteln und/oder Verdickungsmitteln versetzt werden, ohne dass der Farbstoff ausfällt oder dass es zu anderen Inhomogenitäten kommt. Mit den genannten Klotzflotten, Färbebädern und Druckpasten kann man z.B. Textilmaterialien aus natürlichen oder synthetischen Fasermaterialien, wie Wolle, Polyamid und cellulosehaltigen Fasermaterialien, einschliesslich Papier, in bekannter Weise färben oder bedrucken.

Das erfindungsgemässe Verfahren bietet u.a. folgende Vorteile im Vergleich zu den bisher üblichen Verfahren zur Herstellung von flüssigen Farbstoffpräparationen:

- höhere Farbstoffkonzentration der erhaltenen Präparate
- verbesserte Lagerstabilität, erhöhte Applikationsstabilität
- technisch einfachere Aufarbeitung der flüssigen Handelsform
- Ausbeutegewinn (erhöhte Farbstärke)
- geringere Mengen an erforderlichen Hilfsmitteln
- kostengünstigere Herstellung.

In den nachfolgenden Beispielen, welche die Erfindung erläutern, bedeuten Teile, falls nichts anderes angegeben, Gewichtsteile und Prozente Gewichtsprozente. Gewichtsteile und Volumenteile stehen im gleichen Verhältnis zueinander wie g zu ml. ""SR" bedeutet ""Schopper Riegler" und "atro" bedeutet ""absolut trocken". Die Temperaturen sind in Grad Celsius angegeben. Die Farbstoffe liegen vorzugsweise als Alkalisalze, vorallem als Natriumsalze vor. Bei den Viskositätsangaben ist 1 cP gleich 0,001 Pa·s.

**Beispiel A: Herstellung der Membranen**

Die bevorzugten, erfindungsgemäss verwendbaren Membranen können beispielsweise wie folgt hergestellt werden (DE-OS 25 05 254, Beispiel 1):

Aus 25 g Celluloseacetat (Acetylierungsgrad = 39,8%), 45 g Aceton und 30 g Formamid wird eine Lösung hergestellt. Man lässt sie drei Tage stehen, giesst sie auf eine Glasplatte und verstreicht sie mit einem Spatel zu einer Schicht von 0,6 mm Dicke, lässt während 5 Sekunden bei 25° C Lösungsmittel verdunsten, legt die Glasplatte für 2 Stunden in Eiswasser ein und zieht die entstandene Membran von der Glasplatte ab.

Die Membran wird dann in eine 5%ige wässerige Lösung der 1:2-Chromkomplexverbindung des Farbstoffes der Formel

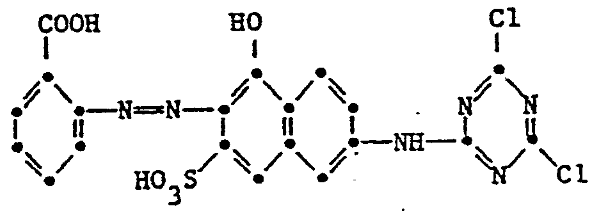

eingetaucht und verbleibt dort während 48 Stunden bei einem pH-Wert von 6 und einer Temperatur von 25°C. Hierauf wird der pH-Wert der Farbstofflösung durch Zusatz von Natriumhydroxid auf 10,4 gebracht und die Lösung während 40 Minuten bei 25°C ständig bewegt.

Anstatt die Membran so in zwei Stufen mit der Farbstofflösung zu behandeln, kann man sie auch einstufig während 2 1/2 Stunden beim pH-Wert 10,5 und bei 25°C mit einer 10%igen Lösung des Chromkomplexfarbstoffes behandeln. Zur anschliessenden Wärmebehandlung (Tempern) wird die Membran während 10 Minuten in Wasser von 60°C eingelegt. Die Herstellung weiterer geeigneter Membranen wird in den übrigen Beispielen der DE-OS 25 05 254 sowie in der DE-OS 30 35 134 und in EP 26399 beschrieben.

**Beispiel 1:** 42 kg Syntheselösung des Rohrfarbstoffes der Formel

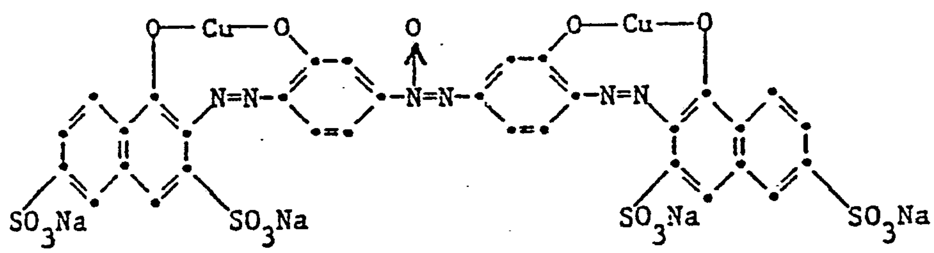

mit einem Trockengehalt von 8,3% (ca. 6,4% Farbstoff und 1,9% NaCl) werden auf einer Anlage für Umkehr-Osmose (0,84 $m^2$ Membranfläche), die wie in Beispiel A beschreieben hergestellt wurde und die einen "Cutofflevel" von 500 besitzt, entzalzt und aufkonzentriert. Die Unkehr-Osmose wird bei pH 6,5-7,5, 20°C und einem Druck von 25 bar in zwei Stufen durchgeführt:

**a) Entsalzung:**

Nach der Zugabe von 40 l Wasser und anschliessender Entfernung von - 40 l Permeat (mittlere Durchflussmenge ca. 20 l/Std.), erhält man eine Farbstofflösung mit einem Elektrolytgehalt von 0,7 %.

**b) Aufkonzentrierung:**

Nach der Entsalzung werden noch 30,5 l Permeat (mittlere Durchflussmenge ca. 12 l/Std.) entfernt Man erhält 11,5 kg einer konzentrierten Farbstofflösung mit 22,5% Trockengehalt, deren Natriumchloridgehalt 0,3% beträgt.

Nach Einstellung der so erhaltenen konzentrierten Farbstofflösung auf einen Farbstoffgehalt von 18% durch Zugabe von Wasser erhält man eine Flüssigformulierung mit geringem Salzgehalt (< 0,2% NaCl), die im Temperaturbereich von -10- bis +40- während mehrerer Monate stabil ist. Diese Formulierung weist folgende Zusammensetzung auf:

18 Gew.-% Farbstoff
ca. 82 Gew.-% Wasser
< 0,2 Gew.-% NaCl.

**Beispiel 2:** 44 kg Syntheselösung des Rohfarbstoffes der Formel

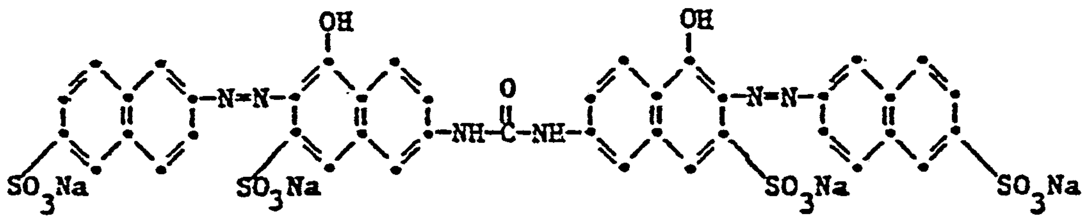

mit einem Trockengehalt von 8,6% (ca. 5,9% Farbstoff und 2,7% NaCl) werden auf einer Anlage für Umkehr-Osmose wie im Beispiel 1 beschrieben entsalzt und aufkonzentriert. Bei der Entsalzung werden 80 l Wasser zugegeben und 80 l Permeat entfernt. Die erhaltene Farblösung (Salzgehalt ca. 0,4%) wird dann aufkonzentriert, indem man 29,5 l Permeat entfernt. Man erhält 14,5 kg einer konzentrierten Farbstofflösung mit 18,0% Trockengehalt. Diese dünnflüssige, während mehrerer Monate bei −10°C bis +40°C unverändert haltbare Flüssigformulierung weist folgende Zusammensetzung auf:

18 Gew.-% Farbstoff
ca. 82 Gew.-% Wasser
0,1 Gew.-% NaCl.

**Beispiel 3:** 21 kg Syntheselösung des Rohfarbstoffes der Formel

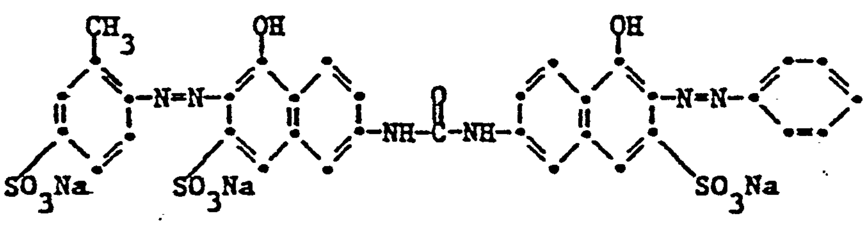

mit einen Trockengehalt von 8,1% (NaCl-Gehalt 2,75%) werden auf einer Anlage für Umkehr-Osmose, wie im Beispiel 1 beschrieben, entsalzt und aufkonzentriert.

a) Entsalzung

Nach der Zugabe won 30 l Wasser und anschliessender Entfernung von 30 l Fermeat erhält man eine Farbstoffsuspension mit einem Salzgehalt von ca. 0,45%.

b) **Aufkonzentrierung:**

Nach der Entsalzung werden noch 12,5 l Fermeat entfernt. Man erhält 8,5 l einer konzentrierten Farbstofflösung. Diese dünnflüssige, während mehrerer Monate bei −10°C bis +40°C unverändert haltbare Flüssigformulierung weist folgende Zusammensetzung auf:

13 Gew.-% Farbstoff
ca. 87 Gew.-% Wasser
0,1 Gew.-% NaCl.

**Beispiele 4**

Wiederholt man das Verfahren gemäss den vorherigen Beispielen unter Verwendung der Syntheselösung eines der Rohfarbstoffe der in der Spalte II angegebenen Formeln der folgenden Tabelle, so erhält man durch Umkehr-Osmose ebenfalls Farbstoff-Konzentrate, deren NaCl-Gehalt in allen Fällem < 1% ist. Die Konzentration des Farbstoffes in den erhaltenen Konzentraten wird in der Spalte III angegeben.

| I Bsp.-Nr. | II Farbstoff | III Konzentration |
|---|---|---|
| 4 22 | 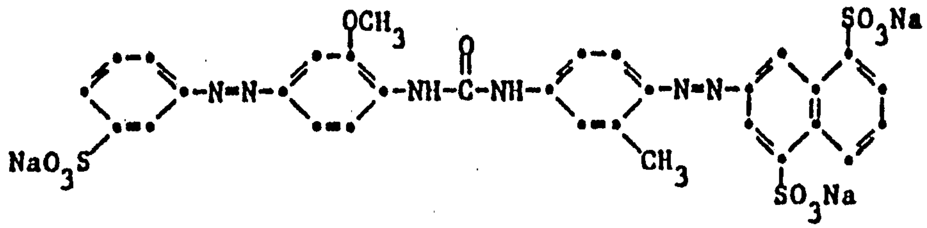 | ca. 18 % |
| 5 23 | 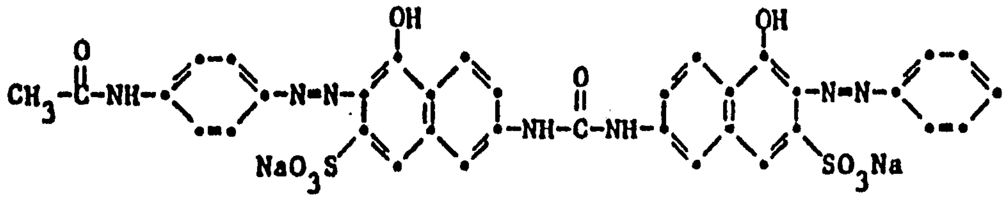 | ca. 14 % |
| 6 24 | 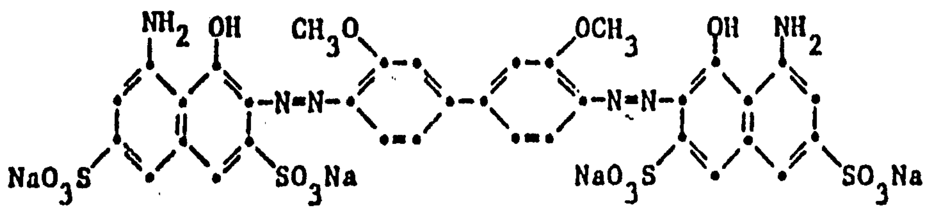 | ca. 17 % |

| I Bsp.-Nr. | II Farbstoff | III Konzentration |
|---|---|---|
| ~~25~~ 7 | 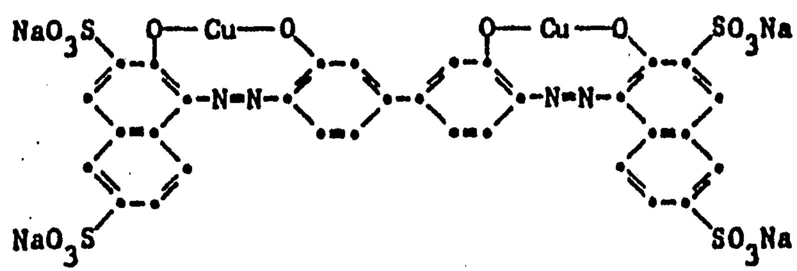 | ca. 18 % |
| ~~26~~ 8 | 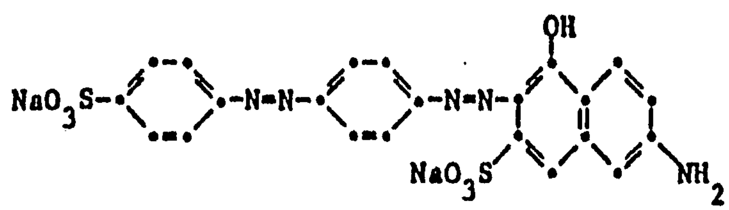 | ca. 17 % |

**Beispiel 9: Druckpapier**

800 kg Sulfatcellulose gebleicht und 200 kg Sulfitcellulose gebleicht, werden in der angelieferten Form in einen Pulper, in dem 14 $m^3$ Farbrikationswasser vorgelegt sind, eingetragen und bis zur Stippenfreiheit aufgeschlagen. Der Aufschlagworgang benötigt 30 Minuten. Anschliessend wird der aufgeschlagene Zellstoff in eine Ableerbütte überführt. Aus der Ableerbütte wird die Zellstoffsuspension mit Stoffmühlen auf einen Mahlgrad von 25°SR gemahlen und gelangt anschliessend im eine Mischbütte. In der Mischbütte erfolgen als weitere Zusätze 250 kg Kaolin Ia (als Füllstoff) sowie 0,1 bis 0,05% der Farbstoff-Formulierung gemäss Beispiel 1, berechnet auf atro Faser. Nach 15 Minuten Aufziehzeit werden 2% Harzleim, berechnet auf atro Cellulose, sowie nach 10 Minuten 4% Alaun, berechnet auf atro Cellulose, zugefügt. Dieser Papierstoff gelangt über den üblichen Prozessablauf auf die Papiermaschine. Man erhält ein blau gefärbtes Druckpapier.

**Beispiel 10: Tissuepapier**

1000 kg Sulfatcellulose gebleicht werden in der angelieferten Form in einen Pulper, in dem 14 m Fabrikationswasser vorgelegt sind, eingetragen und bis zur Stippenfreiheit aufgeschlagen. Der Aufschlagvorgang benötigt 30 Minuten. Anschliessend wird der aufgeschlagene Stoff in eine Ableerbütte überführt. Aus der Ableerbütte wird der Zellstoff mit Stoffmühlen auf einen Mahlgrad von 25°SR gemahlen und gelangt anschliessend in eine Mischbütte. In der Mischbütte erfolgt die Zugabe von 0,1 bis 0,05% Farbstoff-Formulierung gemäss Beispiel 1 bezogen auf atro Faser. Nach 15 Minuten Aufziehzeit gelangt dieser Papierstoff über den üblichen Prozessablauf auf die Papiermaschine. Man erhält ein blau gefärbtes Tissuepapier.

**Beispiel 11: Leimpresse- Applikation**

In 1000 l einer 10%-igen wässrigen, anionischen Stärkelösung (lösliche Stärke, die oxydativ aufgeschlossen ist) werden 5 kg Farbstoff in Form einer wässrigen Formulierung gemäss Beispiel gelöst und via Leimpresse auf eine Papierbahn appliziert. Der Auftrag obiger Lösung beträgt 1,5 g/$m^2$ atro je Seite. Man erhält ein blau gefärbtes Papier.

**Beispiel 12:** Die Syntheselösung bzw. -suspension des 1:2-Chromkomplexes, entsprechend 1 Mol des Farbstoffes der Formel

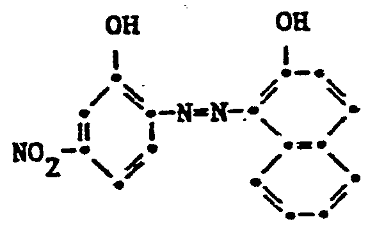

und 1 Mol des Farbstoffes der Formel

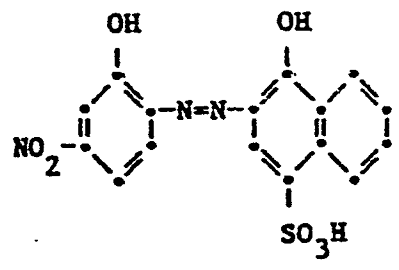

zu 1 Mol Chrom, mit einem Trockengehalt von 10 bis 15 % en Rohfarbstoff, enthaltend ca. 15 % NaCl und ca. 20 % $Na_2SO_4$ berechnet auf den Rohfarbstoff, wird wie im Beispiel 1 beschrieben, entsalzt und aufkonzentriert. Die erhaltene dünnflüssige Lösung (vereinzelte Partikel von einer Durchschnittsgrösse 1 - 2 µm) mit einem Trockengehalt von 32,5 % (entsprechend einer Farbstärke von fast 90 %) weist nur noch einen geringen Restgehalt an Salz auf (0,8 % NaCl, 2 % $Na_2SO_4$, bezogen auf den durch Umkehrosmose gereinigten Farbstoff). Die Farbstärke der Lösung hat sich gegenüber der Ausgangslösung um ca. 300 % erhöht.

Diese konzentrierte Lösung ist mehrere Monate bei Temperaturen zwischen -10° und +30°C lagerstabil. Nach sechs-monatiger Lagerung sind keine Anzeichen für Rekristallisation sichtbar.

**Beispiel 13:** Die Syntheselösung bzw. -suspension des Misch-Chromkomplex-Farbstoffes G.1. Acid Black 52 (No. 15711) mit einem Trockengehalt zwischen 15 und 20 % an Rohfarbstoff, enthaltend ca. 5 % NaCl und weniger als 3 % $Na_2SO_4$, berechnet auf den Rohfarbstoff, wird nach Zugabe von ca. 8 %, bezogen auf den Rohfarbstoff, eines Dispergators (Naphthalinsulfonsäure-Formaldehyd-Kondensationsprodukt-Natriumsalz) auf einer Anlage für Umkehr-Osmose (0,84 $m^2$ Membranfläche), die wie in der DE-OS 30 35 134 beschrieben hergestellt wurde und die einen ""Cut-off-level" von ca. 500 besitzt, entsalzt und aufkonzentriert.

Man erhält eine dünnflüssige, konzentrierte wässrige Lösung (nur vereinzelte Partikel der Grösse < 1 µm vorhanden), welche einen Trokkengehalt von ca. 35 % (entsprechend einer Farbstärke von 80 %) enthält, welcher einen sehr geringen Salzgehalt aufweist (0,4 % NaCl, 1,5 % $Na_2SO_4$, bezogen auf den durch Umkehrosmose gereinigten Farbstoff). Die Farbstärke der Lösung hat sich gegenüber der Ausgangslösung um ca. 100 % erhöht.

Wird die Aufkonzentrierung und Entsalzung durch Behandlung auf der Anlage für Umkehr-Osmose bis zum

Erreichen einer Farbstärke von ca. 95 % fortgesetzt, so weist die erhaltene Flüssigformulierung einen Trockengehalt von ca. 40 % auf (0,1 % NaCl, 0,6 % $Na_2SO_4$ bezogen auf den durch Umkehrosmose gereinigten Farbstoff).

Diese konzentrierte Lösung ist mehrere Monate bei Temperaturen zwischen −10° und +30° lagerstabil. Nach ein monatiger Lagerung setzt sich lediglich eine geringe Menge eines weichen, gut aufrührbaren Sediments ab.

**Beispiel 14:** Die Syntheselösung bzw. -suspension des 1:2-Kobalt-komplexes des Farbstoffes der Formel

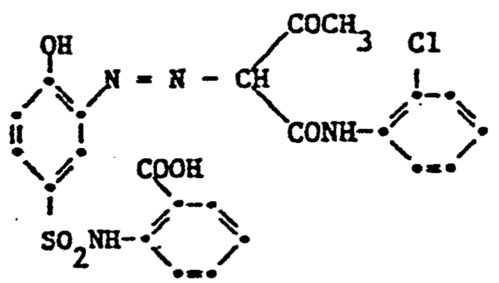

mit einem Trockengehalt won 15 bis 20 % an Rohfarbstoff, enthaltend ca. IZ % NaCl und ca. 9 % $Na_2SO_4$, berechnet auf den Rohfarbstoff, wird nach Zugabe von ca. 10 %, bezogen auf den Rohfarbstoff, eines Dispergators (Naphthalinsulfonsäure-Formaldehyd-Kondensationsprodukt-Natriumsalz) wie im Beispiel 13 beschrieben durch Umkehrosmose entsalzt und aufkonzentriert.

Man erhält eine dünnflüssige, konzentrierte, echte wässrige Lösung, welche einen Trockengehalt von ca. 30 % besitzt (entsprechend einer Farbstärke von ca. 35 %). D.h. es hat eine Farbstärkeerhöhung durch Umkehrosmose um ca. 60 % stattgefunden. Der Rest-Salzgehalt beträgt nur noch 0,2 % NaCl und 1,7 % $Na_2SO_4$, bezogen auf den durch Umkehrosmose gereinigten Farbstoff.

Diese konzentrierte Lösung ist mehrere Monate bei Temperaturen zwischen -10° und +30°C lagerstabil. Nach sechs-monatiger Lagerung sind keine Anzeichen für Rekristallisation sichtbar.

**Beispiel 15: Färbevorschrift für Polyamid**

100 Teile Polyamidstrickgarn werden bei 50°C in ein Färbebad eingeführt, dass auf 4000 Teile Wasser 5 Teile des Farbstoffpräparates des Beispiels 12, 3 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit warmem und kaltem Wasser gründlich gespült und getrocknet. Man erhält ein marineblaugefärbtes.Polyamid mit guten Echtheitseigenschaften.

**Beispiel 16: Färbevorschrift für Wolle**

100 Teile Wollstrickgarn werden bei 50°C in ein Pärbebad eingeführt, das auf 4000 Teile Wasser 5 Teile des Farbstoffpräparates des Beispiels:12, 2 Teile Essigsäure 80 % und 1 Teil eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit warmem und kaltem Wasser gründlich gespült und getrocknet. Man erhält eine marineblaugefärbte Wolle mit guten Echtheitseigenschaften.

## Patentansprüche

1. Verfahren zur Herstellung lagerstabiler, konzentrierter wässriger Farbstoffpräparate von anionischen Papier- oder Wollfarbstoffen, dadurch gekennzeichnet, dass man eine wässrige Lösung bzw. Suspension mindestens eines, als Rohfarbstoff vorliegenden Papier- oder Wollfarbstoffs

(a) zur Abtrennung von Salzen und Synthesenebenprodukten mit Molekulargewichten unter 500 und teilweisen Abtrennung von Wasser über eine halbdurchlässige, asymmetrische, ionische Gruppen enthaltende Membran mit einem cut off level von 300 bis 500 und einem Porendurchmesser von 1 bis 500 Å führt und das Permeat ganz oder teilweise, kontinuierlich oder diskontinuierlich durch Wasser ersetzt, und

(b) die entsalzte Farbstofflösung anschliessend unter Verwendung der gleichen Membran aufkonzentriert, wobei man die Farbstofflösung gegebenenfalls vor und/oder nach dem Membrantrennverfahren mit Zusatzmitteln versetzt.

2. Verfahren nach Anspruch 1, dadurch gekennzeichnet, dass die Membran aus einem Celluloseacetat-Grundgerüst besteht, das durch Umsetzung mit einer reaktive Gruppierungen aufweisenden ionischen Verbindung modifiziert ist.

3. Verfahren nach Anspruch 1, dadurch gekennzeichnet, dass die Membran aus einem Celluloseacetat-Grundgerüst besteht, das einem polyfunktionellen Polymer und einer reaktive Gruppierungen aufweisenden

ionischen Verbindung modifiziert ist.

4. Verfahren nach Anspruch 1, dadurch gekennzeichnet, dass die Membran aus einem Grundgerüst besteht, das Polyacrylnitril oder Copolymerisat aus Acrylnitril und anderen äthylenisch ungesättigten Monomeren enthält, welches durch Umsetzung mit Hydroxylamin und anschliessend Umsetzung mit einer polyfunktionellen monomeren Verbindung, einem polyfunktionellen Polymer und einer reaktive Gruppierungen aufweisenden ionischen Verbindung modifiziert ist.

5. Verfahren nach Anspruch 3 oder 4, dadurch gekennzeichnet, dass das polyfunktionelle Polymer aliphatische oder aromatische Aminogruppen, Hydroxyl-, Thiol-, Isocyanat- und/oder Isothiocyanatgruppen aufweist.

6. Verfahren nach Anspruch 5, dadurch gekennzeichnet, dass sich das polyfunktionelle Polymer von Polyäthylenimin, Polyvinylalkohol, Cellulosederivaten oder Polyvinylanilin ableitet.

7. Verfahren nach den Ansprüchen 2 bis 4, dadurch gekennzeichnet, dass die Membran als ionische Gruppen Sulfonsäure-, Carbonsäure- oder Ammoniumgruppen enthält.

8. Verfahren nach den Ansprüchen 2 bis 4, dadurch gekennzeichnet, dass die Membran als Reste mit ionischen Gruppen Reste eines wasserlöslichen Reaktivfarbstoffes enthält.

9. Verfahren nach Anspruch 4, dadurch gekennzeichnet, dass der Anteil der Acrylnitrileinheiten im Grundgerüst der Membran mindestens 5% und vorzugsweise mindestens 20% beträgt.

10. Verfahren nach Anspruch 9, dadurch gekennzeichnet, dass das der Membran Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymeren auf Acrylnitrilbasis enthällt.

11. Verfahren nach den Ansprüchen 1 bis 10, dadurch gekennzeichnet, dass man als Zusatzmittel gegenüber den anionischen Farbstoffen inerte oberflächenaktive Substanzen, Puffersubstanzen, Textilhilfsmittel, Lösungsvermittler, schaumdämpfende Hilfsmittel, Gefrierschutzmittel, Pilz- und/oder Bakterienwachstum hemmende Stoffe verwendet.

12. Verfahren nach Anspruch 11, dadurch gekennzeichnet, dass man die oberflächenaktive Substanz vor dem Durchgang durch die halbdurchlässige Membran zusetzt.

13. Verfahren nach den Ansprüchen 1 bis 12, dadurch gekennzeichnet, dass man als Rohfarbstoff einen Papierfarbstoff verwendet.

**Claims:**

1. A process for the preparation of a storage-stable, concentrated aqueous dye composition of anionic paper or wool dyes, in which process an aqueous solution or suspension of at least one paper or wool dye in the crude state

(a) is passed through a semi-permeable asymmetric membrane containing ionic groups and having a cut off level of 300 to 500 and a pore dimeter of l to 500 Å to remove salts and synthesis by-products of molecular weights less than 500 and to remove part of the water, and the entire permeate or a part thereof is replaced continuously or discontinuously by water, and

(b) the desalted dye solution is subsquently concentrated using the same membrane,

and, if desired, additives are added to said dye solution before and/or after the membrane separation process.

2. A process according to claim 1, wherein the membrane consists of a cellulose acetate base structure which is modified by reaction with an ionic compound having reactive groups.

3. A process according to claim 1, wherein the membrane consists of a cellulose acetate base structure which is modified by reaction with a polyfunctional monomeric compound, a polyfunctional polymer and an ionic compound having reactive groups.

4. A process according to claim 1, wherein the membrane consits of a base structure which contains polyacrylonitrile or a copolymer of acrylonitrile and other ethylenically unsaturated monomers, which base structure is modified by reaction with hydroxylamine and subsequent reaction with a polyfunctional monomeric compound, a polyfunctional polymer and an ionic compound having reactive groups.

5. A process according to either of claims 3 or 4, wherein the polyfunctional polymer contains aliphatic or aromatic amino groups; hydroxyl groups, thiol groups, isocyanate groups and/or isothiocyanate groups.

6. A process according to claim 5, wherein the polyfunctional polymer is derived from polyethyleneimine, polyvinyl alcohol, cellulose derivatives or polyvinylaniline.

7. A process according to any one of claims 2 to 4, wherein the membrane contains sulfonic acid groups, carboxylic acid groups or ammonium groups as ionic groups.

8. A process according to any one of claims 2 to 4, wherein the membrane contains radicals of a watersoluble reactive dye as radicals having ionic groups.

9. A process according to claim 4, wherein the proportion of acrylonitrile units in the base structure of the membrane is at least 5 % and preferably at least 20 %.

10. A process according to claim 9, wherein the base structure of the membrane contains a copolymer of acrylonitrile with vinyl acetate, a vinyl ether, vinylpyridine, vinyl chloride, styrene, butadiene, acrylic acid, methacrylic acid, maleic anhydride, 2-aminomethyl methacrylate or an allyl compound, or a terpolymer or tetrapolymer based on acrylonitrile.

11. A process according to any one of claims 1 to 10, wherein surfactants, buffer substances, textile

assistants, solubilising agents, anti-foams, anti-freeze agents or substances which inhibit fungal and/or bacterial growth are used as additives to which the anionic dyes are inert.

12. A process according to claim 11, wherein the surfactant is added before passage through the semi-permeable membrane.

13. A process according to any one of claims 1 to 12, wherein the crude dye is a paper dye.

**Revendications**

Procédé pour l'obtention de préparations tinctoriales aqueuses, concentrées, stables au stockage, de colorants anioniques pour le papier ou la laine, caractérisé par le fait que l'on fait passer une solution ou une suspension aqueuse d'au moins un colorant pour le papier ou la laine present en tant que colorant brut

(a) pour l'élimination de sels et de sous-produits de synthèse ayant des poids moléculaires inférieurs à 500 et l'élimination partielle d'eau sur une membran semi-perméable, asymérique, contenant des groupées ioniques, ayant un indice d'arret ("cut off level") de 300 à 500 et un diamètre de pores de 1 à 500 Ů, et on remplace le perméat en totalité ou en partie, de façon continue ou discontinue, par de l'eau, et

(b) on concentre ensuite la solution tinctoriale privée de sels en utilisant la même membrane,

la solution tinctoriale étant éventuellement additionnée d'adjuvants avant et/ou après l'opération de séparation sur membrane.

2. Procédé selon la revendication 1, caractérisé par le fait que la membrane consiste en un réseau de base d'acétate de cellulose qui est modifié par réaction avec un composé ionique présentant des groupements réactifs.

3. Procédé selon la revendication 1, caractérisé par le fait que la membrane consiste en un réseau de base d'acétate de cellulose qui est modifié par réaction avec un composé monomère polyfonctionnel, un polymére polyfonctionnel et un composé ionique présentant des groupements réactifs.

4. Procédé selon la revendication 1, caractérisé par le fait que la membrane consiste en un réseau de base qui contient du polyacrylonitrile ou un copolymére d'acrylonitrile et d'autres monomères à insaturation éthylénique, qui est modifié par réaction avec de l'hydroxylamine et réaction subséquente avec un composé monomére polyfonctionnel, un polymère polyfonctionnel et un composé ionique présentant des groupements réactifs.

5. Procédé selon la revendication 3 ou 4, caractérisé par le fait que le polymère polyfonctionnel présente des groupes amino aliphatiques ou aromatiques, des groupes hydroxyle, thiol, isocyanate et/ou isothiocyanate.

6. Procédé selon la revendication 5, caractérisé par le fait que le polymére polyfonctionnel dérive d'une polyéthylène-imine, d'un poly(alcool vinylique)de dérivés de la cellulose ou d'une polyvinylaniline

7. Procédé selon les revendications 2 à 4, caractérisé par le fait que la membrane contient en tant que groupes ioniques des groupes sulfo carboxyle ou ammonium.

8. Procédé selon les revendications 2 à 4, caractérisé par le fait que la membrane contient en tant que restes à groupes ioniques des restes d'un colorant réactif soluble dans l'eau.

9. Procédé selon la revendication 4, caractérisé par le fait que la proportion des unités acrylonitrile dans le réseau de base de la membrane s'élève à 5% au moins et de préférence à 20% au moins.

10. Procédé selon la revendication 9, caractérisé par le fait que le réseau de base de la membrane contient des copolymères d'acrylonitrile et d'acétate de vinyle, d'éthers vinyliques, de vinylpyridine, de chlorure de vinyle, de styrène, de butadiène, d'acide méthacrylique, l'anhydride maléique, de méthacrylate de 2-aminométhyle ou de composés allyle, ou des ter- ou tétrapolymères à base d'acrylonitrile.

11. Procédé selon les revendications 1 à 10, caractérisé par le fait que l'on utilise en tant qu'additifs des substances tensio-actives, des substances tampon, des produits auxiliaires pour textiles, des tierssolvants, des agents anti-mousse, des antigels, des substances inhibant la croissance de champignons et/ou de bactéries, inertes vis-à-vis des colorants anioniques.

12. Procédé selon la revendication 11, caractérisé par le fait que l'on ajoute la substance tensio-active avant le passage à travers la membrane semi-perméable.

13. Procédé selon les revendications 1 à 12, caractérisé par le fait que l'on utilise en tant que colorant brut un colorant pour papier.